# EUROPEAN PATENT APPLICATION

(11) **EP 4 730 820 A1**
(43) Date of publication of application: **22.04.2026**
(21) Application number: 24822757.1
(22) Date of filing: 13.06.2024
(51) Int. Cl.: H04N 21/482

(54) **MEDIA CONTENT PROCESSING METHOD AND APPARATUS, DEVICE, READABLE STORAGE MEDIUM, AND PRODUCT**

(30) Priority: 13.06.2023 CN 202310701649
(71) Applicant: Beijing Zitiao Network Technology Co., Ltd., Beijing 100190 (CN)
(72) Inventor: LI, Zhenan, Beijing 100028 (CN); ZHANG, Nuomeng, Beijing 100028 (CN)
(74) Representative: Isarpatent
(86) International application number: PCT/CN2024/099075
(87) International publication number: WO 2024/255809

(57) **Abstract**

The embodiment of the disclosure provides methods, apparatuses, devices, readable storage media and products for processing meida content. The method includes: displaying a media content editing page in response to an editing operation triggered by a user based on media content; displaying the media content and a plurality of element recommendation controls associated with the media content in the media content editing page; displaying a presentation element associated with a target interaction element corresponding to the target element recommendation control in the media content, to generate target media content; posting the target media content.

## Description

This application claims the priority to Chinese Patent Application No. 2023107016495, entitled "Method, Apparatus, Device, Readable Storage Medium and Product for Processing Meida Cotent", filed on June 13, 2023, the entire content of which is incorporated herein by reference.

### FIELD

The embodiment of the disclosure relates to the technical field of interface interaction, in particular to a method, an apparatus, a device, a readable storage medium and a product for processing media content.

### BACKGROUND

When the user generates the media content, an interaction control associated with the interaction element may be added to the media content. Therefore, after the media content is posted, other users can perform an interaction operation based on the interactive control.

### SUMMARY

The embodiments of the disclosure provide methods, apparatuses, devices, readable storage medium, and products for processing media content, which are used for solving the technical problem that the existing generation method for target media content is tedious in operation and the interface display content is simple.

In a first aspect, an embodiment of the present disclosure provides a method for processing media content, comprising: displaying a media content editing page in response to an editing operation triggered by a user based on pre-generated media content; displaying the media content and a plurality of element recommendation controls associated with the media content in the media content editing page, the element recommendation controls being in a one-to-one correspondence with interaction elements, the interaction elements being generated based on the media content; displaying, in response to a target element recommendation control in the plurality of element recommendation controls being determined, a presentation element associated with a target interaction element corresponding to the target element recommendation control in the media content, to generate target media content, wherein the target interaction element is associated with a preset interaction operation; posting the target media content, to cause other users to perform a preset interaction operation based on a presentation element in the posted target media content to post media content associated with the target interaction element.

In a second aspect, an embodiment of the present disclosure provides an apparatus for processing media content, comprising:
a display module, configured to display a media content editing page in response to an editing operation triggered by a user based on a pre-generated media content;
a processing module, configured to display the media content and a plurality of element recommendation controls associated with the media content in the media content editing page, the element recommendation controls being in a one-to-one correspondence with the interaction elements, the interaction elements being generated based on the media content;
a determination module, configured to determine a target element recommendation control selected by the user in the plurality of element recommendation controls, and display, in the media content, a presentation element associated with a target interaction element corresponding to the target element recommendation control, to generate target media content, wherein the target interaction element is associated with a preset interaction operation;
a post module, configured to post the target media content, to cause other users to perform a preset interaction operation based on a presentation element in the posted target media content to post media content associated with the target interaction element.

In a third aspect, an embodiment of the disclosure provides an electronic device, comprising: a processor and a memory;
the memory stores computer executable instructions;
the processor executes the computer-executable instructions stored in the memory, to cause the processor to execute the method for processing media content according to the first aspect and various possible designs thereof.

In a fourth aspect, an embodiment of the disclosure provides a computer-readable storage medium, the computer-readable storage medium stores computer-executable instructions which, upon execution by a processor, implements the method for processing media content according to the first aspect and various possible designs thereof.

In a fifth aspect, an embodiment of the disclosure provides a computer program product, comprising a computer program which, upon execution by a processor, implements the method for processing media content according to the first aspect and various possible designs thereof.

### BRIEF DESCRIPTION OF DRAWINGS

In order to more clearly illustrate the technical solutions in embodiments of the present disclosure or in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is a schematic flowchart of a method for processing media content according to an embodiment of the present disclosure;
FIG. 2 is a schematic diagram of interface interaction according to an embodiment of the present disclosure;
FIG. 3 is a schematic flowchart of a method for processing media content according to another embodiment of the present disclosure;
FIG. 4 is a schematic flowchart of a method for processing media content according to still another embodiment of the present disclosure;
FIG. 5 is a schematic diagram of a display interface according to an embodiment of the present disclosure;
FIG. 6 is a schematic diagram of another interface interaction according to an embodiment of the present disclosure;
FIG. 7 is a schematic diagram of still another interface interaction according to an embodiment of the present disclosure;
FIG. 8 is a schematic diagram of still another interface interaction according to an embodiment of the present disclosure;
FIG. 9 is a schematic diagram of still another interface interaction according to an embodiment of the present disclosure;
FIG. 10 is a schematic structural diagram of an apparatus for processing media content according to an embodiment of the present disclosure;
FIG. 11 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. The described embodiments are only a part, but not all, of embodiments. All other embodiments obtained by those skilled in the art based on the embodiments of the present disclosure without creative efforts shall fall within the scope of the present disclosure.

It can be understood that, before the technical solutions disclosed in the embodiments of the present disclosure are used, the types, the usage scope, the usage scenario and the like of personal information related to the present disclosure should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text in the pop-up window. In addition, the pop-up window may further carry a selection control for the user to select "agree" or "disagree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

In order to solve the technical problems that the existing generation operation of target media content is relatively cumbersome and the interface display content is relatively single, the present disclosure provides methods, apparatuses, devices, readable storage medium and products for processing media content.

It should be noted that the methods, apparatuses, devices, readable storage medium and products for processing media content provided in the present disclosure may be applied to any interaction media content generation scenario.

At present, when the user needs to generate the interaction media content, the user needs to manually perform operations such as the addition of the interaction control and the editing of the interaction theme, which tends to be cumbersome. In addition, in the process of editing the media content, the interface display content is relatively single, resulting in poor user experience.

In order to improve the generation efficiency of the interaction media content and enrich the display content in the media content editing page, after the media content generated by the user is obtained, a plurality of interaction elements may be generated based on the media content. A plurality of element recommendation controls corresponding to the plurality of interaction elements are presented in the media content editing page. In response to the user selecting any element recommendation control, the presentation element associated with the target interaction element corresponding to the target element recommendation control may be displayed in the media content to generate the target media content.

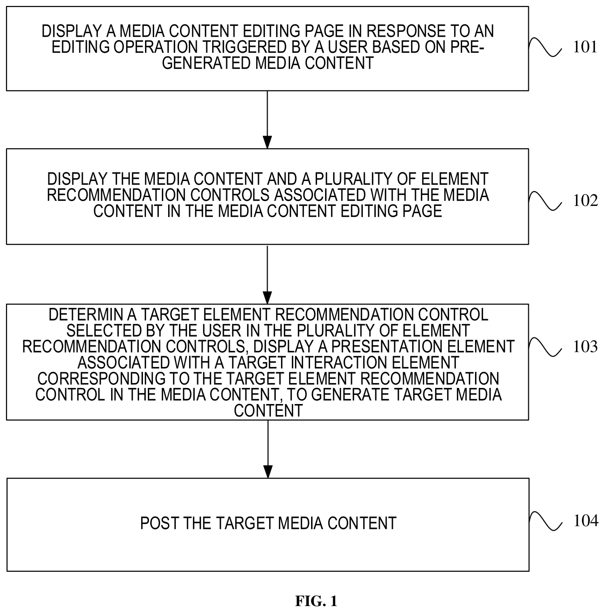

FIG. 1 is a schematic flowchart of a method for processing media content according to an embodiment of the present disclosure. As shown in FIG. 1, the method comprises:
Step 101: displaying a media content editing page in response to an editing operation triggered by a user based on pre-generated media content.

The execution body of this embodiment is an apparatus for processing media content, and the apparatus for processing media content may be coupled to the terminal device. Therefore, a plurality of element recommendation controls associated with the media content may be displayed in the media content editing page, based on a triggering operation by the user on the terminal device, and the interaction media content may be generated and posted based on the triggering operation of the user. Optionally, the apparatus for processing media content may be coupled to a server communicatively connected to the terminal device. Therefore, the media content processing request sent by the terminal device based on the triggering operation of the user can be obtained, the terminal device is controlled to present the element recommendation control, and the interaction media content is generated and posted.

In this implementation, in order to post the media content, the user may generate the media content in advance. In some embodiments, the media content may be collected in real time by a user, or the media content may be uploaded by a user, which is not limited in the present disclosure.

Further, in order to make the posted media content more conform to the personalized requirement of the user, the user may further edit the media content after the media content is generated.

Optionally, the user may initiate an editing operation by triggering a preset editing control. In response to the editing operation triggered by the user based on the pre-generated media content, the media content editing page is displayed, so that the user can edit the media content in the media content editing page.

Step 102: displaying the media content and a plurality of element recommendation controls associated with the media content in the media content editing page, wherein the element recommendation controls is in a one-to-one correspondence with interaction elements, and the interaction elements is generated based on the media content.

In this implementation, after the media content editing page is displayed, the media content may be displayed in the media content editing page, so that the user performs an editing operation based on the currently displayed media content.

Further, in order to enrich the display content in the media content, and facilitate other users to perform an interaction operation based on the media content, a presentation element associated with the media content may also be added to the media content.

Optionally, for ease of addition of the presentation element, the element recommendation control corresponding to the plurality of interaction elements may be determined based on the media content. The interaction element may be description information corresponding to the media content, or the interaction element may be type information corresponding to the media content, or the interaction element may be an entry for interacting with other users, and so forth. For example, in actual application, if the media content is a video media content about dressing, the associated interaction element may be such element as "share your outfit today", "OOTD", and "summer outfit". It should be noted that the recommendation of the interaction element based on the media content is performed when the user is sufficiently authorized, for example, the user sets the corresponding authorization switch to be ON in the setting page.

After being generated, the plurality of interaction element recommendation controls may be presented in the media content editing page, where the element recommendation control is in a one-to-one correspondence with the interaction element.

Step 103: displaying, in response to a target element recommendation control in the plurality of element recommendation controls being determined, a presentation element associated with a target interaction element corresponding to the target element recommendation control in the media content, to generate target media content, wherein the target interaction element is associated with a preset interaction operation.

In this implementation, after the plurality of element recommendation controls are displayed in the media content editing page, the user may perform a selection operation among the plurality of element recommendation controls according to the actual requirement. In response to the triggering operation performed by the user on any element recommendation control, the presentation element associated with the target interaction element corresponding to the target element recommendation control currently triggered by the user may be displayed in the media content, to generate the target media content. The presentation element includes, but is not limited to, an interaction control element, an image element, a text element, an audio element, and the like.

For example, in the practical application, in response to a triggering operation performed by a user on an element recommendation control corresponding to "share your outfit today", an interactive control corresponding to "share your outfit today" may be added to the media content. Therefore, after the target media content is posted, other users may trigger the interactive control to generate and post the media content that contains the wearing of today, thus to achieve the interaction operation.

Still taking the practical application for example, in order to enrich the display content in the target media content, in response to a triggering operation by the user on the element recommendation control corresponding to "share your outfit today", the content such as a cartoon element, a text element and the like associated with the outfit may be added to the media content.

Still with the practical application example, in order to enrich the presentation content in the target media content, in response to a triggering operation by the user on the element recommendation control corresponding to the "pet", an audio element associated with pets may be determined. The audio element associated with pets may be added into the media content to realize rapid addition of audio.

Optionally, the target interaction element may be associated with a preset interaction operation. The preset interaction operation includes, but is not limited to, the operation for generating and posting media content associated with the interaction element, voting and so on.

For example, the preset interaction operation corresponding to "share your outfit today" may be generating and posting the media content that includes the OOTD. The preset interaction operation corresponding to the "pet" may be generating and posting the media content including the pet.

Step 104: posting the target media content, to cause other users to perform a preset interaction operation based on a presentation element in the posted target media content to post media content associated with the target interaction element.

In this implementations, after the target media content is generated, the target media content may be posted.

Optionally, the media content editing page may be provided with a post control. The user may trigger the post control to implement the post operation on the target media content.

Further, after the target media content is posted, other users may browse the target media content in a process of browsing the media content stream. In addition, when browsing the target media content, other users may perform a preset interaction operation associated with the target interaction element based on the presentation element in the target media content, and post the media content associated with the target interaction element.

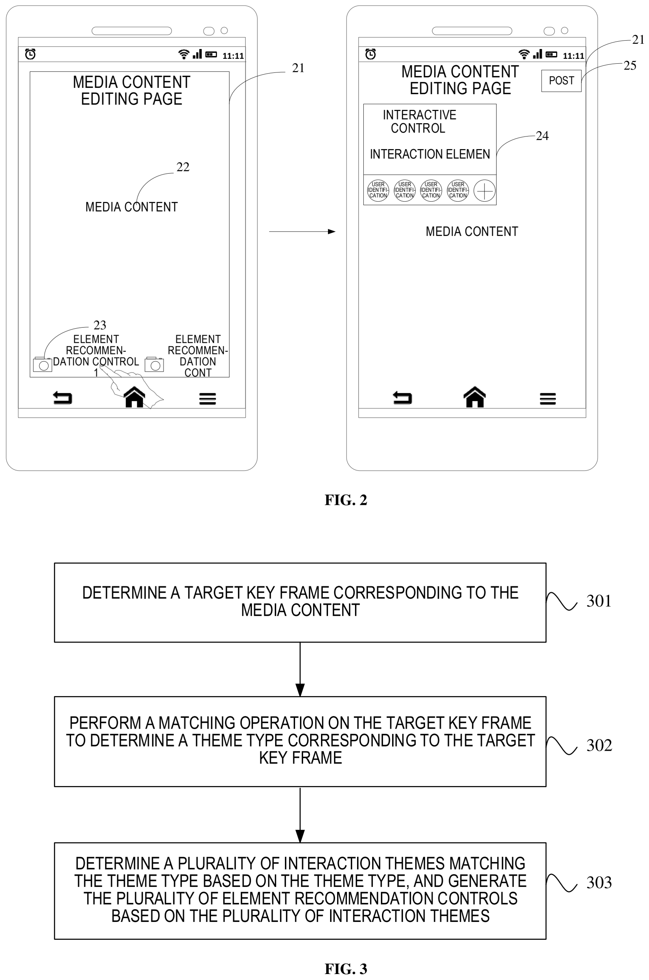

FIG. 2 is a schematic diagram of an interface interaction according to an embodiment of the present disclosure. As shown in FIG. 2, the media content editing page 21 may display media content 22 and a plurality of element recommendation controls 23 associated with the media content 22. In response to the triggering operation by the user on any element recommendation control 23, the presentation element 24 associated with the target interaction element corresponding to the target element recommendation control selected by the user may be displayed in the media content, to generate the target media content, where the presentation element 24 may be an interactive control. The interaction element associated with the media content may be displayed in the interactive control. In addition, the media content editing page 21 further includes a post control 25. The user may post the target media content through a triggering operation on the post control 25.

According to the method for processing media content provided in this embodiment, in a process of editing a pre-generated media content by a user, a plurality of element recommendation controls are determined based on the media content, and the plurality of element recommendation controls are displayed in the media content editing page. Based on the selection operation of the user, the presentation element associated with the target interaction element corresponding to the target element recommendation control selected by the user is displayed in the media content to generate the target media content. Therefore, the addition of the presentation element can be automatically realized based on the media content, the association between the presentation element and the media content can be improved, and the generation efficiency of the target media content is improved. In addition, the plurality of element recommendation controls are displayed in the media content editing page, so that the display content in the media content editing page can be enriched, the interaction operation in the media content editing page is enriched, and the user experience is improved.

Further, on the basis of any of the foregoing embodiments, the method further comprises: determining a plurality of element recommendation controls matching the media content based on the media content.

In some embodiments, the presentation element corresponding to the element recommendation control comprises at least one of an image element, a text element, an audio element, or a control element.

In this embodiment, in order to implement the presentation operation on the plurality of element recommendation controls, it is necessary to determine a plurality of interaction elements based on the media content. For each interaction element, an element recommendation control corresponding to the interaction element is determined.

It should be noted that each element recommendation control corresponds to a presentation element. The presentation element includes at least one of an image element, a text element, an audio element, and a control element.

For example, the presentation element may be an interactive control. After the target media content including the interactive control is posted, the user performs a preset interaction operation associated with the target interaction element based on the presentation element in the target media content, and posts the media content associated with the target interaction element. Alternatively, the interaction element may be an image element associated with the target interaction element. After the target media content including the image element is posted, other users may post the media content including the image element by triggering operation on the image element.

According to the method for processing media content provided in this embodiment, by determining the plurality of element recommendation controls that match the media content, the element recommendation control associated with the media content can be presented in the media content editing page, and the presentation content in the media content editing page is enriched. In addition, an associated and diversified presentation element is set for the element recommendation control, so that the user can quickly add the presentation element to the media content through the trigger operation on the element recommendation control, which enriches the interaction mode in the media content editing page, and enriches the display content in the target media content.

FIG. 3 is a schematic flowchart of a method for processing media content according to another embodiment of the present disclosure. On the basis of any foregoing embodiments, the interaction element comprises an interaction theme. The determining the plurality of element recommendation controls matching the media content based on the media content comprises:
Step 301: determining a target key frame corresponding to the media content.
Step 302: performing a matching operation on the target key frame to determine a theme type corresponding to the target key frame.
Step 303: determining a plurality of interaction themes matching the theme type based on the theme type, and generating the plurality of element recommendation controls based on the plurality of interaction themes.

In this embodiment, the interaction element may include an interaction theme. To enable display of an element recommendation control associated with media content within a media content editing page, a plurality of interaction themes may be determined based on the media content. It should be noted that, determining the plurality of interaction themes based on the media content is performed locally at the client when the user is sufficiently authorized.

Optionally, the target key frame corresponding to the media content may be determined. If the media content is the video media content, the target key frame corresponding to the media content may be determined based on a preset frame extraction mode. If the media content is the image media content, the image in the image media content may be directly determined as the target key frame corresponding to the media content.

Further, after the target key frame is obtained, a matching operation may be performed on the target key frame to determine a theme type corresponding to the target key frame.

After the theme type corresponding to the target key frame is determined, a plurality of interaction themes matching the theme type may be determined based on the theme type.

Optionally, in order to determine the interaction theme, the theme database may be preset. The theme database may be provided with a variety of different types of themes in advance. After the theme type corresponding to the target key frame is determined, a plurality of interaction themes matching the theme type may be determined in the theme database based on the theme type. It should be noted that the determination of the interaction theme may be performed within the client; and when the user authorization is obtained, the feature of the target key frame may also be uploaded to the server for determining the interaction theme.

Further, a plurality of element recommendation controls may be generated based on the plurality of interaction themes. The interaction theme corresponds to the element recommendation control one-to-one.

Further, on the basis of any of the above embodiments, step 301 comprises: performing frame extraction on the media content according to a preset frame extraction condition to obtain the target key frame. Alternatively, step 301 comprises: displaying a plurality of key frames corresponding to the media content in response to a frame extraction triggered by the user based on the media content; determining, in response to a selection triggered by the user for the plurality of key frames, the key frame selected by the user as the target key frame.

In this embodiment, the frame extraction operation may be performed on the media content according to a preset frame extraction condition to obtain the target key frame. The preset frame extraction condition includes, but is not limited to, extracting an N-th frame of video frame, extracting a M-second video frame, extracting a video frame including a target object, extracting a video frame including a preset action and/or an expression, and the like. In practical applications, the user may set the frame extraction condition according to actual requirements, which is not limited in the present disclosure.

Optionally, the target video frame may be selected by the user according to actual requirements. In response to a frame extraction operation triggered by the user based on the media content, a plurality of key frames corresponding to the media content may be displayed. The user may select the target key frame from the plurality of key frames based on actual requirements. In response to a selection operation triggered by the user for the plurality of key frames, the key frame selected by the user is determined as the target key frame.

According to the method for processing media content provided in this embodiment, by performing the frame extraction operation on the media content, the matching operation is performed based on the target key frame obtained by the extraction frame, so that a plurality of interaction themes associated with the media content can be accurately determined, and then a plurality of element recommendation controls can be generated based on the plurality of interaction themes. In this way, the association between the element recommendation control and the media content is improved, so that the presentation element added by the user in the media content based on the triggering operation on the element recommendation control is more suitable for the personalized requirement of the user, and the user experience is improved.

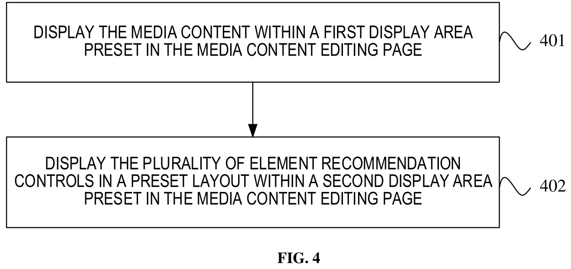

FIG. 4 is a schematic flowchart of a method for processing media content according to still another embodiment of the present disclosure. On the basis of any of above embodiments, as shown in FIG. 4, the step 102 comprises:
Step 401: displaying the media content within a first display area preset in the media content editing page.
Step 402: displaying the plurality of element recommendation controls in a preset layout within a second display area preset in the media content editing page.

In this embodiment, the media content editing page may comprise a first display area and a second display area. The first display area and the second display area may be arranged side by side in a horizontal direction or a vertical direction. Alternatively, the first display area may be a full-screen display area, and the second display area may be displayed on an upper layer of the first display area. The user may adjust the display parameters of the first display area and the second display area according to actual requirements, which is not limited in the present disclosure. The display parameter includes, but is not limited to, a display position, a display size, and the like.

Based on the above layout, the media content may be displayed within a first display area preset in the media content editing page. A plurality of element recommendation controls may be displayed in a preset layout within a second display area preset in the media content editing page.

For example, in the practical application, the media content may be displayed in full screen in the first display area in the media content editing page. A second display area is displayed in the upper layer of the first display area, and a plurality of element recommendation controls are displayed in the second display area according to a preset layout mode. The second display area may be located on the lower side of the display interface to avoid obscuring the display content in the media content editing page.

Optionally, the preset layout may be a landscape layout, a portrait layout, or the like, which is not limited in the present disclosure.

According to the method for processing media content provided by the embodiment, the media content is displayed in the first display area preset in the media content editing page, and the plurality of element recommendation controls are displayed in the second display area preset in the media content editing page according to a preset layout mode. Thus, the presentation content in the media content editing page can be enriched, and the interaction mode in the media content editing page can be enriched based on the plurality of element recommendation controls.

Optionally, based on any of the foregoing embodiments, step 402 comprises:
displaying a preset number of element recommendation controls horizontally within the second display area, and hidding other element recommendation controls.

In this embodiment, the preset layout may be a landscape layout. The element recommendation control may be displayed laterally within the second display area.

Optionally, when there are a plurality of element recommendation controls, a plurality of element recommendation controls may not be completely displayed in the second display area. Therefore, a preset number of element recommendation controls may be displayed horizontally in the second display area, and other element recommendation controls may be hidden.

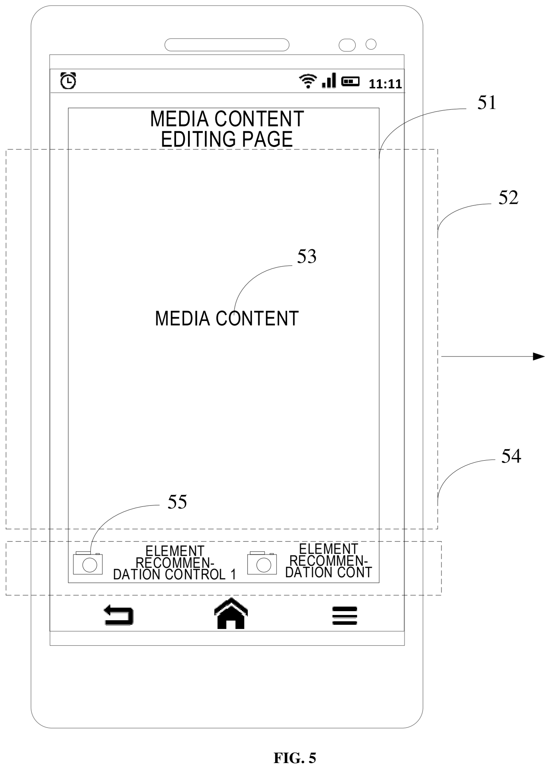

FIG. 5 is a schematic diagram of a display interface according to an embodiment of the present disclosure. As shown in FIG. 5, the first display area 52 on the media content editing page 51 may display media content 53, and the second display area 54 on the media content editing page 51 may horizontally display a preset number of element recommendation controls 55 and hide other element recommendation controls. The second display area 54 may be located below the first display area 55.

According to the method for processing media content provided by the embodiment, the preset number of element recommendation controls are horizontally displayed in the second display area, and other element recommendation controls are hidden. In this way, more element recommendation controls can be displayed without shielding the media content.

Further, on the basis of any of the above embodiments, after step 402, the method further comprises:
switching to display the hidden other element recommendation controls in response to a first sliding operation of the user in the horizontal direction in the second display area.

In this embodiment, the user may trigger the first sliding operation in the horizontal direction within the second display area. In response to the first sliding operation, the hidden other element recommendation controls may be switched to display, thus more element recommendation controls may be viewed.

According to the method for processing media content provided by the embodiment, the hidden other element recommendation controls are switched to be displayed in response to the first sliding operation of the user in the horizontal direction within the second display area. Therefore, the content presented in the media content editing page is more consistent with the personalized requirement of the user, and the user experience is improved.

Further, on the basis of any of the above embodiments, step 103 comprises:
determining, in response to a preset triggering operation by the user on any element recommendation control, the element recommendation control as the target element recommendation control;
wherein the preset triggering operation comprises any of a single-click operation, a double-click operation, a long-press operation, or a second slide operation in a vertical direction.

In this embodiment, after the plurality of element recommendation controls is displayed in the second display area, the user may select the target element recommendation control according to the actual requirement.

Optionally, the user may determine the element recommendation control as the target element recommendation control by performing a preset triggering operation on any element recommendation control. The preset triggering operation comprises any of a single-click operation, a double-click operation, a long-press operation, and a second slide operation in a vertical direction.

For example, the user may slide up any element recommendation control. In response to the sliding up operation, the element recommendation control is determined as a target element recommendation control.

According to the method for processing media content provided in this embodiment, the element recommendation control is determined as the target element recommendation control in response to the preset triggering operation by the user on any element recommendation control, thereby enriching the interaction manner in the media content editing page.

Further, on the basis of any of the above embodiments, the method further comprises:
determining a display state of the element recommendation control in response to a preset triggering operation by the user on any element recommendation control;
if the display state of the element recommendation control is a complete display state, displaying the presentation element associated with the target interaction element corresponding to the target element recommendation control in the media content, to generate the target media content;
if the display state of the element recommendation control is an incomplete display state, determining a target direction of a hidden portioin corresponding to the element recommendation control, and moving the plurality of element recommendation controls in an opposite direction to the target direction to completely present the element recommendation control triggered by the user.

In this embodiment, when there is a plurality of element recommendation controls, a plurality of element recommendation controls may not be completely displayed in the second display area. Therefore, there may be completely displayed element recommendation controls and incompletely displayed element recommendation controls in the second display area.

In order to enable the user to more intuitively determine the currently triggered element recommendation control, the display state of the element recommendation control is determined in response to the preset triggering operation by the user on any element recommendation control. Different processes are performed based on different display states.

Optionally, if the display state of the element recommendation control is a complete display state, the user can intuitively view the complete element recommendation control. At this time, the presentation element associated with the target interaction element corresponding to the target element recommendation control may be displayed in the media content to generate the target media content.

Optionally, if the display state of the element recommendation control is an incomplete display state, in order to enable the user to view the hidden element recommendation control, the target direction of the hidden part corresponding to the element recommendation control may be determined. The plurality of element recommendation controls may be moved in a direction opposite to the target direction to complete display the element recommendation control triggered by the user. For example, if the right part of the element recommendation control is hidden, the plurality of element recommendation controls may be moved to the left to complete display the element recommendation control triggered by the user.

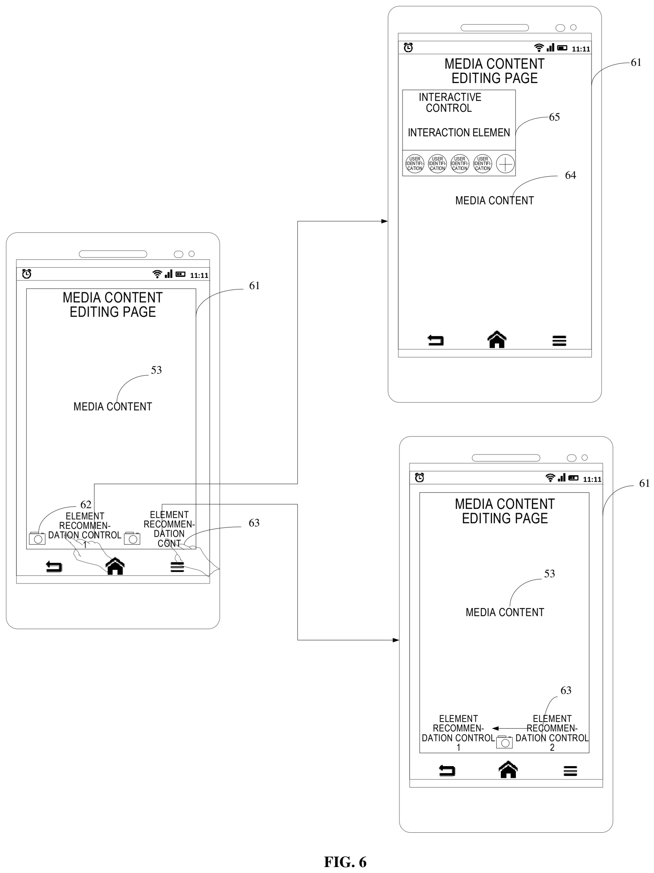

FIG. 6 is a schematic diagram of another interface interaction according to an embodiment of the present disclosure. As shown in FIG. 6, the media content editing page 61 may display a target element recommendation control 62 in a complete display state and a target element recommendation control 63 in an incomplete display state. In response to the triggering operation on the target element recommendation control 62 in the complete display state, the presentation element 65 associated with the target element recommendation control 62 in the complete display state may be displayed in the media content 64. In response to the triggering operation by the user on the target element recommendation control 63 in the incomplete display state, the target direction of the hidden part corresponding to the element recommendation control 63 may be determined, and the plurality of element recommendation controls 63 are moved in the opposite direction to the target direction to complete display the element recommendation control 63 triggered by the user.

According to the method for processing media content provided in this embodiment, different interaction operations are performed based on the display state of the element recommendation control in response to the triggering operation by the user on the element recommendation control, so that the interaction operation in the media content editing page can be further enriched. In addition, the user can more intuitively view the complete element recommendation control.

Further, on the basis of any of the foregoing embodiments, the presentation element comprises an interactive control. After step 103, the method further comprises:
switching to display, in response to a triggering operation by the user on the element recommendation control, an interaction element corresponding to other element recommendation control on the interactive control.

In this embodiment, the presentation control may include an interactive control, and an interaction element associated with the element recommendation control currently selected by the user may be displayed on the interactive control.

After the interactive control is displayed in the media content editing page with the triggering operation by the user on the target element recommendation control, in response to the triggering operation by the user on the other element recommendation controls, the interaction element corresponding to the other element recommendation control may be switched to be displayed on the interactive control.

For example, in practical application, an interactive control is displayed in the media content editing page, and an interaction element "OOTD" corresponding to the target element recommendation control is displayed on the interactive control. In response to the triggering operation by the user on the element recommendation control associated with the "pet" interaction element, the "pet" interaction element may be switched to be displayed on the interactive control.

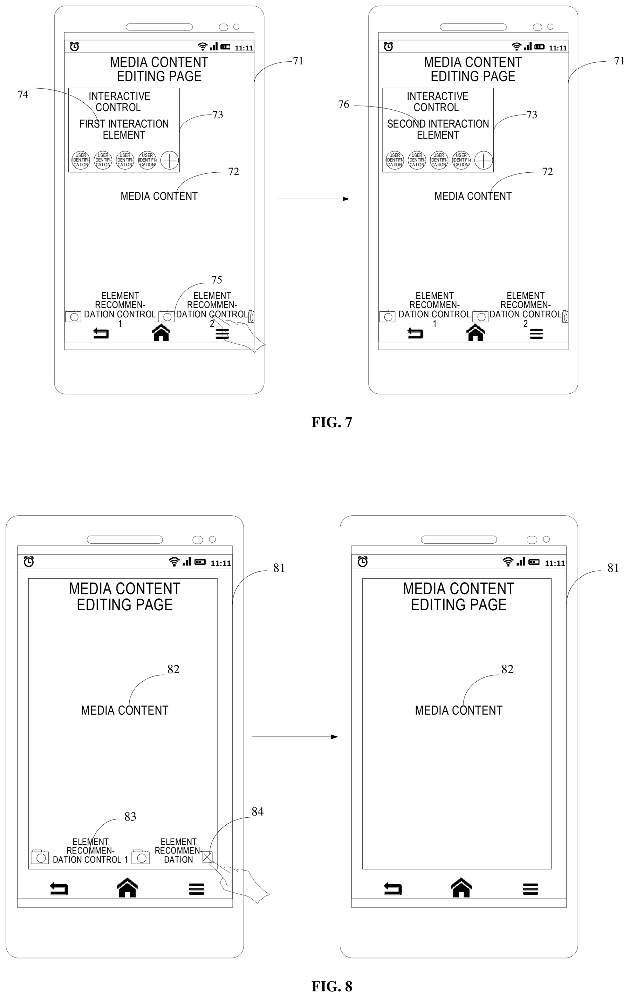

FIG. 7 is a schematic diagram of another interface interaction according to an embodiment of the present disclosure. As shown in FIG. 7, the media content editing page 71 may display media content 72 and an interactive control 73 associated with a target element recommendation control triggered by a user, where the interactive control 73 displays an interaction element 74 associated with the target element recommendation control. In response to the triggering operation by the user on the other element recommendation control 75, the interaction element 76 corresponding to the element recommendation control 75 currently triggered by the user may be switched to be displayed on the interactive control 73.

According to the method for processing media content provided by the embodiment, after the presentation element is displayed in the media content, in response to the triggering operation by the user on the element recommendation control, the interaction element corresponding to the other element recommendation control is switched to be displayed on the interactive control. Therefore, rapid switching of the interaction element can be realized, the interaction operation in the media content editing page is enriched, and the user experience is improved.

Further, on the basis of any of the above embodiments, the media content editing page further comprises a preset close control. The method further comprises:
stopping displaying the plurality of element recommendation controls in the media content editing page in response to a triggering operation by the user on the close control.

In this embodiment, in order to make the display content in the media content editing page more conform to the personalized requirement of the user, the media content editing page further comprises a preset close control. The user may implement the control on the display state of the plurality of element recommendation controls through the close control.

Optionally, in response to the triggering operation by the user on the close control, the plurality of element recommendation controls may be stopped from being displayed in the media content editing page.

FIG. 8 is a schematic diagram of another interface interaction according to an embodiment of the present disclosure. As shown in FIG. 8, the media content editing page 81 displays media content 82, a plurality of element recommendation controls 83, and a close control 84. The plurality of element recommendation controls 83 may be stopped from being displayed within the media content editing page 81 in response to the triggering operation by the user on the close control 84.

According to the method for processing media content provided by the embodiment, the close control is provided in the media content editing page, so that the user can control the display of the plurality of element editing controls based on the actual requirement. Thus, the presentation content in the media content editing page is more consistent with the personalized requirement of the user.

Further, on the basis of any of the above embodiments, the media content editing page further comprises a preset processing control. The method further comprises:
re-displaying the plurality of element recommendation controls in the media content editing page in response to a triggering operation by the user on the processing control.

In this embodiment, the media content editing page further comprises a preset processing control. After the user controls the plurality of element recommendation controls not to be displayed through trigger the close control, the plurality of element recommendation controls may be controlled to be redisplayed through the processing control.

Optionally, a plurality of element recommendation controls are re-displayed in the media content editing page in response to a triggering operation by the user on the processing control.

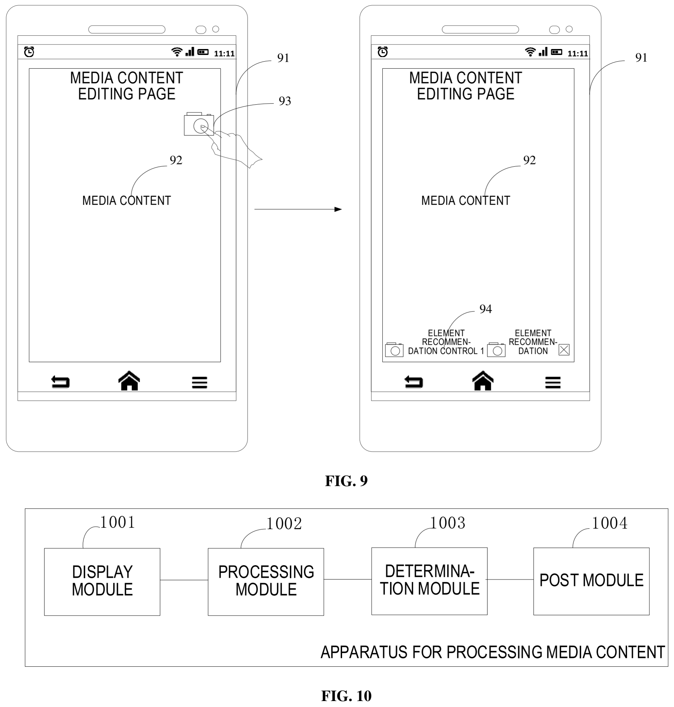

FIG. 9 is a schematic diagram of another interface interaction according to an embodiment of the present disclosure. As shown in FIG. 9, after the plurality of element recommendation controls is stopped from being displayed based on the close control, the media content 92 and the processing control 93 are displayed in the media content editing page 91. The plurality of element recommendation controls 94 may be redisplayed in the media content editing page 91 in response to the triggering operation by the user on the processing control 93.

According to the method for processing media content provided by the embodiment, the plurality of element recommendation controls are redisplayed in the media content editing page in response to the triggering operation by the user on the processing control, so that the user can control the display of the plurality of element editing controls based on the actual requirement. Therefore, the display content in the media content editing page is more consistent with the personalized requirement of the user.

Further, on the basis of any of the foregoing embodiments, the presentation element comprises an interactive control. The media content editing page further comprises a preset processing control.

Step 103 further comprises:
displaying a theme editing page in response to a triggering operation by the user on the processing control or the interactive control;
obtaining editing content generated by the user in the theme editing page;
performing an editing operation on the interactive control based on the editing content.

In this embodiment, the presentation element may include an interactive control. The user may perform the editing operation on the interactive control based on the actual requirement, so that the display of the interaction control in the target media content is more consistent with the personalized requirement of the user.

Optionally, the theme editing page may be displayed in response to a triggering operation by the user on the processing control. As an implementation, the user may also perform the triggering operation on an interactive control within the media content editing page. In response to the triggering operation by the user on the interactive control, the theme editing page may be presented. Therefore, the user can perform the editing operation on the interactive control for editing content in the theme editing page.

Further, after the theme editing page is displayed, the editing content generated by the user in the theme editing page may be obtained, where the editing content includes but is not limited to content such as a display size of the interactive control, a display position, a display color, a text parameter corresponding to an interaction element displayed in the interactive control, and the like. The editing operation may be performed on the interactive control based on the editing content.

Further, on the basis of any of the above embodiments, the theme editing page further comprises a plurality of element recommendation controls.

Optionally, a plurality of element recommendation controls may also be displayed in the theme editing page. The plurality of element recommendation controls displayed in the theme editing page may be the same as the plurality of element recommendation controls displayed in the media content editing page.

By displaying the plurality of element recommendation controls in the theme editing page, the user can quickly switch the interaction elements associated with the interaction control through the trigger element recommendation control in the theme editing page, so that the interactive control in the target media content is more consistent with the personalized requirement of the user.

As an implementation, in order to avoid obscuring the display content in the theme editing page, the plurality of element recommendation controls may be displayed on the lower side of the theme editing page. The user may further adjust display parameters such as a display position and a display size of the plurality of element recommendation controls based on actual requirements, which is not limited in the present disclosure.

According to the method for processing media content provided by the embodiment, the theme editing page is displayed in response to the triggering operation by the user on the processing control or the interactive control. In this way, the user can perform the editing operation on the interactive control in the theme editing page, the display of the interactive control is more consistent with the personalized requirement of the user, the interaction mode in the media content editing page is enriched, and the user experience is improved.

Further, on the basis of any of the above embodiments, step 102 comprises:
determining whether the media content comprises the presentation element;
if not, displaying the media content and the plurality of element recommendation controls associated with the media content in the media content editing page.

In this embodiment, the user may directly collect or upload the content to generate the media content. In this case, the media content does not comprise a presentation element. Alternatively, in the process of browsing the media content stream, the user may generate the media content by triggering presentation elements in the media content posted by other users. In this case, the media content may carry a presentation element.

When the media content does not comprise the presentation element, a plurality of element recommendation controls may be presented in the media content editing page, so that the user implements addition of the presentation element based on the element recommendation control. On the contrary, when the media content already comprises the presentation element, the plurality of element recommendation controls may no longer be displayed.

Therefore, after obtaining the media content generated by the user, it may be determined whether the media content already comprises the presentation element. If not, the media content editing page displays the media content and the plurality of element recommendation controls associated with the media content. On the contrary, only the media content may be displayed in the media content editing page.

According to the method for processing media content provided in this embodiment, when it is detected that the media content does not comprise the presentation element, a plurality of element recommendation controls are presented, so that redundant display of elements in the media content editing page can be avoided.

FIG. 10 is a schematic structural diagram of an apparatus for processing media content according to an embodiment of the present disclosure. As shown in FIG. 10, the apparatus comprises a display module 1001, a processing module 1002, a determination module 1003, and a post module 1004. The display module 1001 is configured to display a media content editing page in response to an editing operation triggered by a user based on a pre-generated media content. The processing module 1002 is configured to display the media content and a plurality of element recommendation controls associated with the media content in the media content editing page, wherein the element recommendation controls is in a one-to-one correspondence with the interaction elements, and the interaction elements is generated based on the media content. The determination module 1003 is configured to determine a target element recommendation control selected by the user in the plurality of element recommendation controls, and display, in the media content, a presentation element associated with a target interaction element corresponding to the target element recommendation control, to generate target media content, wherein the target interaction element is associated with a preset interaction operation. The post module 1004 is configured to post the target media content, to cause other users to perform a preset interaction operation based on a presentation element in the posted target media content to post media content associated with the target interaction element.

Further, on the basis of any of the above embodiments, the apparatus further comprises: a determination module, configured to determine a plurality of element recommendation controls matching the media content based on the media content. The presentation element corresponding to the element recommendation control comprises at least one of an image element, a text element, an audio element, or a control element.

Further, on the basis of any of the above embodiments, the interaction element comprises an interaction theme. The determination module is configured to: determine a target key frame corresponding to the media content; perform a theme matching operation on the target key frame to determine a theme type corresponding to the target key frame; determine a plurality of interaction themes matching the theme type based on the theme type, and generate the plurality of element recommendation controls based on the plurality of interaction themes.

Further, on the basis of any of the above embodiments, the determination module is configured to: perform frame extraction on the media content according to a preset frame extraction condition to obtain the target key frame. Alternatively, the determination module is configured to: display a plurality of key frames corresponding to the media content in response to a frame extraction triggered by the user based on the media content; determine, in response to a selection triggered by the user for the plurality of key frames, the key frame selected by the user as the target key frame.

Further, on the basis of any of the above embodiments, the processing module is configured to: display the media content within a first display area preset in the media content editing page; display the plurality of element recommendation controls in a preset layout within a second display area preset in the media content editing page.

Further, on the basis of any of the above embodiments, the processing module is configured to: display a preset number of element recommendation controls horizontally within the second display area, and hide other element recommendation controls.

Further, on the basis of any of the above embodiments, the processing module is configured to: switch to display the hidden other element recommendation controls in response to a first sliding operation of the user in the horizontal direction in the second display area.

Further, on the basis of any of the above embodiments, the determination module is configured to: determine, in response to a preset triggering operation by the user on any element recommendation control, the element recommendation control as the target element recommendation control. The preset triggering operation comprises any of a single-click operation, a double-click operation, a long-press operation, or a second slide operation in a vertical direction.

Further, on the basis of any of the above embodiments, the apparatus further comprises: a determination module, configured to determine a display state of the element recommendation control in response to a preset triggering operation by the user on any element recommendation control; a display module, configured to display, in response to the display state of the element recommendation control being a complete display state, the presentation element associated with the target interaction element corresponding to the target element recommendation control in the media content, to generate the target media content; an adjust module, configured to determine, in response to the display state of the element recommendation control being an incomplete display state, a target direction of a hidden portioin corresponding to the element recommendation control, and move the plurality of element recommendation controls in an opposite direction to the target direction to completely present the element recommendation control triggered by the user.

Further, on the basis of any of the above embodiments, the presentation element comprises an interactive control. The apparatus further comprise: a display module, configured to switch to display, in response to a triggering operation by the user on the element recommendation control, an interaction element corresponding to other element recommendation control on the interactive control.

Further, on the basis of any of the above embodiments, the media content editing page further comprises a preset close control. The apparatus further comprises: a display module, configured to stop displaying the plurality of element recommendation controls in the media content editing page in response to a triggering operation by the user on the close control.

Further, on the basis of any of the above embodiments, the media content editing page further comprises a preset processing control. The apparatus further comprises a display module, configured to re-display the plurality of element recommendation controls in the media content editing page in response to a triggering operation by the user on the processing control.

Further, on the basis of any of the above embodiments, the presentation element comprises an interactive control. The media content editing page further comprises a preset processing control. The apparatus further comprises: a display module, configured to display a theme editing page in response to a triggering operation by the user on the processing control or the interactive control; an obtaining module, configured to obtain editing content generated by the user in the theme editing page; a editing module, configured to perform an editing operation on the interactive control based on the editing content.

Further, on the basis of any of the above embodiments, the theme editing page further comprises a plurality of element recommendation controls.

Further, on the basis of any of the above embodiments, the plurality of element recommendation controls presented in the theme editing page are the same as the plurality of element recommendation controls presented in the media content editing page.

Further, on the basis of any of the above embodiments, the processing module is configured to: determine whether the media content comprises the presentation element; display, in accordance with a determination that the media content does not comprise the presentation element, the media content and the plurality of element recommendation controls associated with the media content in the media content editing page.

The device provided in this embodiment may be configured to perform the technical solutions in the foregoing method embodiments, and implementation principles and technical effects thereof are similar, and details are not described herein again in this embodiment.

In order to implement the foregoing embodiments, an embodiment of the present disclosure further provides an electronic device, including: a processor and a memory;
the memory stores computer executable instructions;
the processor executes the computer executable instruction stored in the memory, so that the processor executes the method for processing media content according to any one of the foregoing embodiments.

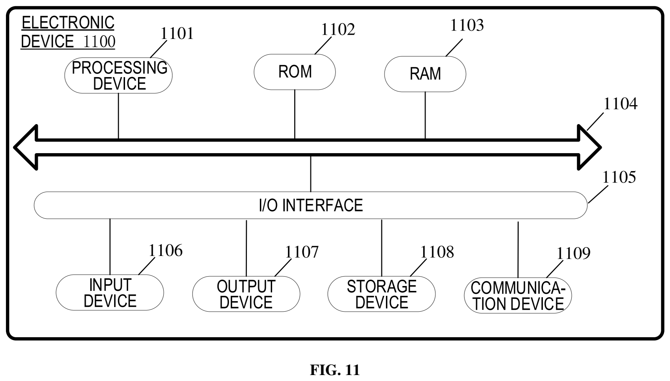

FIG. 11 is a schematic structural diagram of an electronic device according to an embodiment of the present disclosure. As shown in FIG. 11, the electronic device 1100 may a terminal device or a server. The terminal device may include, but is not limited to, a mobile terminal such as a mobile phone, a notebook computer, a digital broadcast receiver, a personal digital assistant (PDA), a portable Android device (PAD), a portable media player (PMP), an in-vehicle terminal (for example, an in-vehicle navigation terminal), and a fixed terminal such as a digital TV, a desktop computer, or the like. The electronic device shown in FIG. 11 is merely an example, and should not impose any limitation on the functions and scope of use of the embodiments of the present disclosure.

As shown in FIG. 11, the electronic device 1100 may include a processing device (for example, a central processing unit, a graphics processor, etc.) 1101, which may perform various appropriate actions and processing according to a program stored in a read only memory (ROM) 1102 or a program loaded into a random access memory (RAM) 1103 from a storage device 1108. In the RAM 1103, various programs and data required by the operation of the electronic device 1100 are also stored. The processing device 1101, the ROM 1102, and the RAM 1103 are connected to each other through a bus 1104. Input/output (I/O) interface 1105 is also connected to bus 1104.

Generally, the following devices may be connected to the I/O interface 1105: an input device 1106 including, for example, a touch screen, a touch pad, a keyboard, a mouse, a camera, a microphone, an accelerometer, a gyroscope, etc.; an output device 1107 including, for example, a liquid crystal display (LCD), a speaker, a vibrator, etc.; a storage device 1108 including, for example, a magnetic tape, a hard disk, etc.; and a communication device 1109. The communication device 1109 may allow the electronic device 1100 to communicate wirelessly or wired with other devices to exchange data. While FIG. 11 shows an electronic device 1100 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure comprises a computer program product comprising a computer program embodied on a computer readable medium, the computer program comprising program code for performing the method shown in the flowchart. In such embodiments, the computer program may be downloaded and installed from the network through the communication device 1109, or installed from the storage device 1108, or from the ROM 1102. When the computer program is executed by the processing device 1101, the foregoing functions defined in the method of the embodiments of the present disclosure are performed.

It should be noted that the computer-readable medium described above may be a computer readable signal medium, a computer readable storage medium, or any combination of thereof. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In order to implement the foregoing embodiments, an embodiment of the present disclosure further provides a computer-readable storage medium storing a computer-executable instructions which, when executed by the processor, implement the method for processing media content according to any one of the foregoing embodiments is implemented.

In order to implement the foregoing embodiments, an embodiment of the present disclosure further provides a computer program product, including a computer program which, when executed by a processor, implements the method for processing media content according to any one of the foregoing embodiments.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "a unit for obtaining at least two Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

In a first aspect, according to one or more embodiments of the disclosure, a method for processing media content is provided, comprising:
displaying a media content editing page in response to an editing operation triggered by a user based on pre-generated media content;
displaying the media content and a plurality of element recommendation controls associated with the media content in the media content editing page, the element recommendation controls being in a one-to-one correspondence with interaction elements, the interaction elements being generated based on the media content;
displaying, in response to a target element recommendation control in the plurality of element recommendation controls being determined, a presentation element associated with a target interaction element corresponding to the target element recommendation control in the media content, to generate target media content, wherein the target interaction element is associated with a preset interaction operation;
posting the target media content, to cause other users to perform a preset interaction operation based on a presentation element in the posted target media content to post media content associated with the target interaction element.

According to one or more embodiments of the disclosure, the method further comprises:
determining a plurality of element recommendation controls matching the media content based on the media content;
wherein, the presentation element corresponding to the element recommendation control comprises at least one of an image element, a text element, an audio element, or a control element.

According to one or more embodiments of the disclosure, the interaction element comprises an interaction theme;
determining the plurality of element recommendation controls matching the media content based on the media content comprises:
determining a target key frame corresponding to the media content;
performing a theme matching operation on the target key frame to determine a theme type corresponding to the target key frame;
determining a plurality of interaction themes matching the theme type based on the theme type, and generating the plurality of element recommendation controls based on the plurality of interaction themes.

According to one or more embodiments of the disclosure, determining the target key frame corresponding to the media content comprises:
performing frame extraction on the media content according to a preset frame extraction condition to obtain the target key frame;
or, determining the target key frame corresponding to the media content comprises:
   displaying a plurality of key frames corresponding to the media content in response to a frame extraction triggered by the user based on the media content;
   determining, in response to a selection triggered by the user for the plurality of key frames, the key frame selected by the user as the target key frame.

According to one or more embodiments of the disclosure, displaying the media content and the plurality of element recommendation controls associated with the media content in the media content editing page comprises:
displaying the media content within a first display area preset in the media content editing page;
displaying the plurality of element recommendation controls in a preset layout within a second display area preset in the media content editing page.

According one or more embodiments of the disclosure, displaying the plurality of element recommendation controls in the preset layout within a second display area preset in the media content editing page comprises:
displaying a preset number of element recommendation controls horizontally within the second display area, and hidding other element recommendation controls.

According to one or more embodiments of the disclosure, after displaying the plurality of element recommendation controls in the preset layout within the second display area preset in the media content editing page, the method further comprises:
switching to display the hidden other element recommendation controls in response to a first sliding operation of the user in the horizontal direction in the second display area.

According to one or more embodiments of the disclosure, in response to the target element recommendation control in the plurality of element recommendation controls being determined comprises:
determining, in response to a preset triggering operation by the user on any element recommendation control, the element recommendation control as the target element recommendation control;
wherein the preset triggering operation comprises any of a single-click operation, a double-click operation, a long-press operation, or a second slide operation in a vertical direction.

According to one or more embodiments of the disclosure, the method further comprises:
determining a display state of the element recommendation control in response to a preset triggering operation by the user on any element recommendation control;
displaying, in response to the display state of the element recommendation control being a complete display state, the presentation element associated with the target interaction element corresponding to the target element recommendation control in the media content, to generate the target media content;
determining, in response to the display state of the element recommendation control being an incomplete display state, a target direction of a hidden portioin corresponding to the element recommendation control, and moving the plurality of element recommendation controls in an opposite direction to the target direction to completely present the element recommendation control triggered by the user.

According to one or more embodiments of the disclosure, the presentation element comprises an interactive control;
after displaying the presentation element associated with the target interaction element corresponding to the target element recommendation control in the media content, the method further comprises:
switching to display, in response to a triggering operation by the user on the element recommendation control, an interaction element corresponding to other element recommendation control on the interactive control.

According to one or more embodiments of the disclosure, the media content editing page further comprises a preset close control;
the method further comprises:
stopping displaying the plurality of element recommendation controls in the media content editing page in response to a triggering operation by the user on the close control.

According to one or more embodiments of the disclosure, the media content editing page further comprises a preset processing control;
the method further comprises:
re-displaying the plurality of element recommendation controls in the media content editing page in response to a triggering operation by the user on the processing control.

According to one or more embodiments of the disclosure, the presentation element comprises an interactive control;
the media content editing page further comprises a preset processing control;
after displaying the presentation element associated with the target interaction element corresponding to the target element recommendation control in the media content, the method further comprises:
   displaying a theme editing page in response to a triggering operation by the user on the processing control or the interactive control;
   obtaining editing content generated by the user in the theme editing page;
   performing an editing operation on the interactive control based on the editing content.

According to one or more embodiments of the disclosure, the theme editing page further comprises a plurality of element recommendation controls.

According to one or more embodiments of the disclosure, n the plurality of element recommendation controls presented in the theme editing page are the same as the plurality of element recommendation controls presented in the media content editing page.

According to one or more embodiments of the disclosure, displaying the media content and the plurality of element recommendation controls associated with the media content in the media content editing page comprises:
determining whether the media content comprises the presentation element;
displaying, in accordance with a determination that the media content does not comprise the presentation element, the media content and the plurality of element recommendation controls associated with the media content in the media content editing page.

In a second aspect, according to one or more embodiments of the disclosure, an apparatus for process media content is provide, comprising:
a display module, configured to display a media content editing page in response to an editing operation triggered by a user based on a pre-generated media content;
a processing module, configured to display the media content and a plurality of element recommendation controls associated with the media content in the media content editing page, wherein the element recommendation controls is in a one-to-one correspondence with the interaction elements, and the interaction elements is generated based on the media content;
a determination module, configured to determine a target element recommendation control selected by the user in the plurality of element recommendation controls, and display, in the media content, a presentation element associated with a target interaction element corresponding to the target element recommendation control, to generate target media content, wherein the target interaction element is associated with a preset interaction operation;
a post module, configured to post the target media content, to cause other users to perform a preset interaction operation based on a presentation element in the posted target media content to post media content associated with the target interaction element.

According to one or more embodiments of the disclosure, the apparatus further comprises:
a determination module, configured to determine a plurality of element recommendation controls matching the media content based on the media content;
wherein the presentation element corresponding to the element recommendation control comprises at least one of an image element, a text element, an audio element, or a control element.

According to one or more embodiments of the disclosure, the interaction element comprises an interaction theme;
the determination module is configured to:
determine a target key frame corresponding to the media content;
perform a theme matching operation on the target key frame to determine a theme type corresponding to the target key frame;
determine a plurality of interaction themes matching the theme type based on the theme type, generate the plurality of element recommendation controls based on the plurality of interaction themes.

According to one or more embodiments of the disclosure, the determination module is configured to:
perform frame extraction on the media content according to a preset frame extraction condition to obtain the target key frame;
or the determination module is configured to:
   display a plurality of key frames corresponding to the media content in response to a frame extraction triggered by the user based on the media content;
   determine, in response to a selection triggered by the user for the plurality of key frames, the key frame selected by the user as the target key frame.

According to one or more embodiments of the disclosure, the processing module is configured to:
display the media content within a first display area preset in the media content editing page;
display the plurality of element recommendation controls in a preset layout within a second display area preset in the media content editing page.

According to one or more embodiments of the disclosure, the processing module is configured to:
display a preset number of element recommendation controls horizontally within the second display area, and hide other element recommendation controls.

According to one or more embodiments of the disclosure, the processing module is configured to:
switch to display the hidden other element recommendation controls in response to a first sliding operation of the user in the horizontal direction in the second display area.

According to one or more embodiments of the disclosure, the determination module is configured to:
determine, in response to a preset triggering operation by the user on any element recommendation control, the element recommendation control as the target element recommendation control;
wherein the preset triggering operation comprises any of a single-click operation, a double-click operation, a long-press operation, or a second slide operation in a vertical direction.

According to one or more embodiments of the disclosure, the apparatus further comprises:
a determination module, configured to determine a display state of the element recommendation control in response to a preset triggering operation by the user on any element recommendation control;
a display module, configured to display, in response to the display state of the element recommendation control being a complete display state, the presentation element associated with the target interaction element corresponding to the target element recommendation control in the media content, to generate the target media content;
an adjust module, configured to determine, in response to the display state of the element recommendation control being an incomplete display state, a target direction of a hidden portion corresponding to the element recommendation control, and move the plurality of element recommendation controls in an opposite direction to the target direction to completely present the element recommendation control triggered by the user.

According to one or more embodiments of the disclosure, the presentation element comprises an interactive control;
the apparatus further comprise:
a display module, configured to switch to display, in response to a triggering operation by the user on the element recommendation control, an interaction element corresponding to other element recommendation control on the interactive control.

According to one or more embodiments of the disclosure, the media content editing page further comprises a preset close control;
the apparatus further comprises:
a display module, configured to stop displaying the plurality of element recommendation controls in the media content editing page in response to a triggering operation by the user on the close control.

According to one or more embodiments of the disclosure, the media content editing page further comprises a preset processing control;
the apparatus further comprises:
a display module, configured to re-display the plurality of element recommendation controls in the media content editing page in response to a triggering operation by the user on the processing control.

According to one or more embodiments of the disclosure, the presentation element comprises an interactive control;
the media content editing page further comprises a preset processing control;
the apparatus further comprises:
   a display module, configured to display a theme editing page in response to a triggering operation by the user on the processing control or the interactive control;
   an obtaining module, configured to obtain editing content generated by the user in the theme editing page;
   an editing module, configured to perform an editing operation on the interactive control based on the editing content.

According to one or more embodiments of the disclosure, the theme editing page further comprises a plurality of element recommendation controls.

According to one or more embodiments of the disclosure, the plurality of element recommendation controls presented in the theme editing page are the same as the plurality of element recommendation controls presented in the media content editing page.

According to one or more embodiments of the disclosure, the processing module is configured to:
determine whether the media content comprises the presentation element;
display, in accordance with a determination that the media content does not comprise the presentation element, the media content and the plurality of element recommendation controls associated with the media content in the media content editing page.

In a third aspect, according to one or more embodiments of the disclosure, an electronic device is provided, comprising: a processor and a memory;
the memory stores computer executable instructions;
the processor executes the computer-executable instructions stored in the memory, to cause the processor to execute the method for processing media content according to the first aspect and various possible designs thereof.

In a fourth aspect, according to one or more embodiments of the disclosure, a computer-readable storage medium is proviced, the computer-readable storage medium stores computer-executable instructions which, upon execution by a processor, implements the method for processing media content according to the first aspect and various possible designs thereof.

In a fifth aspect, according to one or more embodiments of the disclosure, a computer program product is provided, comprising a computer program which, upon execution by a processor, implements the method for processing media content according to the first aspect and various possible designs thereof.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for processing media content, comprising:
displaying a media content editing page in response to an editing operation triggered by a user based on pre-generated media content;
displaying the media content and a plurality of element recommendation controls associated with the media content in the media content editing page, the element recommendation controls being in a one-to-one correspondence with interaction elements, the interaction elements being generated based on the media content;
displaying, in response to a target element recommendation control in the plurality of element recommendation controls being determined, a presentation element associated with a target interaction element corresponding to the target element recommendation control in the media content, to generate target media content, wherein the target interaction element is associated with a preset interaction operation;
posting the target media content, to cause other users to perform a preset interaction operation based on a presentation element in the posted target media content to post media content associated with the target interaction element.

2. The method of claim 1, wherein the method further comprises:
determining a plurality of element recommendation controls matching the media content based on the media content;
wherein, the presentation element corresponding to the element recommendation control comprises at least one of an image element, a text element, an audio element, or a control element.

3. The method of claim 2, wherein the interaction element comprises an interaction theme;
determining the plurality of element recommendation controls matching the media content based on the media content comprises:
determining a target key frame corresponding to the media content;
performing a theme matching operation on the target key frame to determine a theme type corresponding to the target key frame;
determining a plurality of interaction themes matching the theme type based on the theme type, and generating the plurality of element recommendation controls based on the plurality of interaction themes.

4. The method of claim 3, wherein determining the target key frame corresponding to the media content comprises:
performing frame extraction on the media content according to a preset frame extraction condition to obtain the target key frame;
or, determining the target key frame corresponding to the media content comprises:
displaying a plurality of key frames corresponding to the media content in response to a frame extraction triggered by the user based on the media content;
determining, in response to a selection triggered by the user for the plurality of key frames, the key frame selected by the user as the target key frame.

5. The method of claim 1, wherein displaying the media content and the plurality of element recommendation controls associated with the media content in the media content editing page comprises:
displaying the media content within a first display area preset in the media content editing page;
displaying the plurality of element recommendation controls in a preset layout within a second display area preset in the media content editing page.

6. The method of claim 5, wherein displaying the plurality of element recommendation controls in the preset layout within a second display area preset in the media content editing page comprises:
displaying a preset number of element recommendation controls horizontally within the second display area, and hidding other element recommendation controls.

7. The method of claim 6, wherein after displaying the plurality of element recommendation controls in the preset layout within the second display area preset in the media content editing page, the method further comprises:
switching to display the hidden other element recommendation controls in response to a first sliding operation of the user in the horizontal direction in the second display area.

8. The method of claim 1, wherein in response to the target element recommendation control in the plurality of element recommendation controls being determined comprises:
determining, in response to a preset triggering operation by the user on any element recommendation control, the element recommendation control as the target element recommendation control;
wherein the preset triggering operation comprises any of a single-click operation, a double-click operation, a long-press operation, or a second slide operation in a vertical direction.

9. The method of claim 1, wherein the method further comprises:
determining a display state of the element recommendation control in response to a preset triggering operation by the user on any element recommendation control;
displaying, in response to the display state of the element recommendation control being a complete display state, the presentation element associated with the target interaction element corresponding to the target element recommendation control in the media content, to generate the target media content;
determining, in response to the display state of the element recommendation control being an incomplete display state, a target direction of a hidden portioin corresponding to the element recommendation control, and moving the plurality of element recommendation controls in an opposite direction to the target direction to completely present the element recommendation control triggered by the user.

10. The method of any of claims 1 to 9, wherein the presentation element comprises an interactive control;
after displaying the presentation element associated with the target interaction element corresponding to the target element recommendation control in the media content, the method further comprises:
switching to display, in response to a triggering operation by the user on the element recommendation control, an interaction element corresponding to other element recommendation control on the interactive control.

11. The method of any of claims 1 to 9, wherein the media content editing page further comprises a preset close control;
the method further comprises:
stopping displaying the plurality of element recommendation controls in the media content editing page in response to a triggering operation by the user on the close control.

12. The method of claim 11, wherein the media content editing page further comprises a preset processing control;
the method further comprises:
re-displaying the plurality of element recommendation controls in the media content editing page in response to a triggering operation by the user on the processing control.

13. The method of any of claims 1 to 9, wherein the presentation element comprises an interactive control;
the media content editing page further comprises a preset processing control;
after displaying the presentation element associated with the target interaction element corresponding to the target element recommendation control in the media content, the method further comprises:
displaying a theme editing page in response to a triggering operation by the user on the processing control or the interactive control;
obtaining editing content generated by the user in the theme editing page;
performing an editing operation on the interactive control based on the editing content.

14. The method of claim 13, wherein the theme editing page further comprises a plurality of element recommendation controls.

15. The method of claim 14, wherein the plurality of element recommendation controls presented in the theme editing page are the same as the plurality of element recommendation controls presented in the media content editing page.

16. The method of any of claims 1 to 9, wherein displaying the media content and the plurality of element recommendation controls associated with the media content in the media content editing page comprises:
determining whether the media content comprises the presentation element;
displaying, in accordance with a determination that the media content does not comprise the presentation element, the media content and the plurality of element recommendation controls associated with the media content in the media content editing page.

17. An apparatus for processing media content, comprising:
a display module, configured to display a media content editing page in response to an editing operation triggered by a user based on a pre-generated media content;
a processing module, configured to display the media content and a plurality of element recommendation controls associated with the media content in the media content editing page, the element recommendation controls being in a one-to-one correspondence with the interaction elements, the interaction elements being generated based on the media content;
a determination module, configured to determine a target element recommendation control selected by the user in the plurality of element recommendation controls, and display, in the media content, a presentation element associated with a target interaction element corresponding to the target element recommendation control, to generate target media content, wherein the target interaction element is associated with a preset interaction operation;
a post module, configured to post the target media content, to cause other users to perform a preset interaction operation based on a presentation element in the posted target media content to post media content associated with the target interaction element.

18. An electronic device, comprising: a processor and a memory;
the memory stores computer executable instructions;
the processor executes the computer-executable instructions stored in the memory, to cause the processor to execute the method for processing media content according to any of claims 1 to 16.

19. A computer-readable storage medium, **characterized in that**, the computer-readable storage medium stores computer-executable instructions which, upon execution by a processor, implements the method for processing media content according to any of claims 1 to 16.

20. A computer program product, comprising a computer program which, upon execution by a processor, implements the method for processing media content according to any of claims 1 to 16.
